# EUROPEAN PATENT APPLICATION

(11) **EP 4 475 222 A1**
(43) Date of publication of application: **11.12.2024**
(21) Application number: 24166806.0
(22) Date of filing: 27.03.2024
(51) Int. Cl.: H01M 4/36, C01B 33/02, H01M 4/38, H01M 10/0525

(54) **ACTIVE MATERIAL FOR LITHIUM-ION BATTERIES AND LITHIUM-ION BATTERY**

(30) Priority: 16.05.2023 JP 2023080975
(71) Applicant: TOYOTA JIDOSHA KABUSHIKI KAISHA, Aichi-ken 471-8571 (JP)
(72) Inventor: OTAKI, Mitsutoshi, Toyota-shi, 471-8571 (JP); YOSHIDA, Jun, Toyota-shi, 471-8571 (JP)
(74) Representative: D Young & Co LLP

(57) **Abstract**

The present disclosure provides an active material for lithium-ion batteries, having low expansion during initial charging and a high non-expansion region retention rate even with repeated charging-discharging, and a lithium-ion battery comprising such an active material for batteries. The active material for lithium-ion batteries of the present disclosure comprises silicon clathrate comprising type I silicon clathrate and type II silicon clathrate. In the active material for lithium-ion batteries, a ratio of a content ratio of the type I silicon clathrate relative to a content ratio of the type II silicon clathrate is 0.01% or greater and 53% or less. The lithium-ion battery of the present disclosure comprises a negative electrode active material layer, and the negative electrode active material layer comprises the active material for lithium-ion batteries of the present disclosure.

## Description

### FIELD

The present disclosure relates to an active material for lithium-ion batteries and a lithium-ion battery.

### BACKGROUND

In recent years, there has been ongoing development of batteries. For example, in the automotive industry, the development of batteries for use in electric vehicles or hybrid vehicles has been advancing. In addition, silicon is known as an electrode active material used in batteries, particularly lithium-ion batteries.

Silicon electrode active materials have a large theoretical capacity and are effective in high energy densification of batteries. However, silicon electrode active materials have a problem of large expansion during charging. On the other hand, it is known that using a silicon clathrate electrode active material as a silicon electrode active material suppresses expansion during charging.

For example, PTL 1 discloses a silicon clathrate electrode active material comprising a silicon clathrate type II crystal phase and including voids inside primary particles, wherein a void amount of the voids having a fine pore diameter of 100 nm or less is 0.05 cc/g or more and 0.15 cc/g or less.

PTL 2 discloses a silicon clathrate electrode active material comprising primary particles comprising at least one crystal phase of silicon clathrate type I and silicon clathrate type II, wherein the primary particles include voids therein.

### [CITATION LIST]

### [PATENT LITERATURE]

[PTL 1] Japanese Unexamined Patent Publication (Kokai) No. 2021-158004
[PTL 2] Japanese Unexamined Patent Publication (Kokai) No. 2020-087886

### SUMMARY

### [TECHNICAL PROBLEM]

Although silicon clathrate electrode active materials can suppress expansion during charging as compared to conventional silicon electrode active materials, there is a demand for further suppressing expansion of silicon clathrate electrode active materials during charging.

An object of the present disclosure is to provide an active material for lithium-ion batteries, having low expansion during initial charging and a high non-expansion region retention rate even with repeated charging-discharging, and a lithium-ion battery comprising such an active material for batteries.

### [SOLUTION TO PROBLEM]

The present disclosers have discovered that the above object can be achieved by the following means.
<Aspect 1> An active material for lithium-ion batteries,
   comprising silicon clathrate comprising type I silicon clathrate and type II silicon clathrate, wherein
   a ratio of a content ratio of the type I silicon clathrate relative to a content ratio of the type II silicon clathrate is 0.01% or greater and 53% or less.
<Aspect 2> The active material for lithium-ion batteries according to Aspect 1, wherein the ratio is 0.1% or greater and 15% or less.
<Aspect 3> The active material for lithium-ion batteries according to Aspect 1 or 2, wherein a ratio of a mass of the type I silicon clathrate relative to a total mass of all components contained in the active material is 0.01% by mass or greater and 33% by mass or less.
<Aspect 4> The active material for lithium-ion batteries according to any one of Aspects 1 to 3, wherein the type I silicon clathrate and/or type II silicon clathrate is porous silicon clathrate.
<Aspect 5> A lithium-ion battery, comprising a negative electrode active material layer, wherein the negative electrode active material layer comprises the active material for lithium-ion batteries according to any one of Aspects 1 to 4.

### [ADVANTAGEOUS EFFECTS OF INVENTION]

According to the present disclosure, an active material for lithium-ion batteries, having low expansion during initial charging and a high non-expansion region retention rate even with repeated charging-discharging, and a lithium-ion battery comprising such an active material can be provided.

### DESCRIPTION OF EMBODIMENTS

Hereinafter, embodiments of the present disclosure will be described in detail. It should be noted that the present disclosure is not limited to the following embodiments, and various modifications can be made thereto within the scope of the disclosure.

### <<Active material for lithium-ion batteries>>

The active material for lithium-ion batteries of the present disclosure comprises silicon clathrate comprising type I silicon clathrate and type II silicon clathrate. In the active material for lithium-ion batteries, a ratio of a content ratio of the type I silicon clathrate relative to a content ratio of the type II silicon clathrate is 0.01% or greater and 53% or less.

The expansion and contraction during charging-discharging when using type I silicon clathrate as the negative electrode active material are large compared to type II silicon clathrate. Without intending to be bound by any theory, the reason therefor is considered that the sodium amount in type II silicon clathrate is less than the sodium amount in type I silicon clathrate. Therefore, based on this premise, when using silicon clathrate as the negative electrode active material, it is considered preferable that only type II silicon clathrate be used and type I silicon clathrate be absent.

The present disclosers have unexpectedly discovered that by setting the ratio of type I silicon clathrate relative to type II silicon clathrate within a predetermined range, not only can the expansion during initial charging of the active material for lithium-ion batteries be decreased, but the expansion during charging when charging-discharging is repeated can also be decreased.

Without intending to be bound by any theory, the reason therefor is considered that type I silicon clathrate is thermodynamically more stable than type II silicon clathrate, and the structural stability during lithium-ion insertion is improved.

In the crystal phases of type I silicon clathrate and type II silicon clathrate, polyhedrons including pentagon or hexagon are formed by a plurality of silicon elements. The polyhedrons have spaces inside that can include metal ions such as lithium ions. By inserting metal ions in these spaces, volume change due to charging-discharging can be suppressed. Since the crystal phases of type I silicon clathrate and type II silicon clathrate have spaces inside that can include metal ions, there is an advantage that crystal structures are easily maintained even with repeated charging-discharging.

As a method of confirming that the active material for lithium-ion batteries of the present disclosure comprises type I silicon clathrate and type II silicon clathrate, a method of identifying the peaks of each silicon clathrate by X-ray diffraction measurements using CuKα rays is exemplified.

The ratio of the content ratio of type I silicon clathrate relative to the content ratio of type II silicon clathrate in the active material for lithium-ion batteries of the present disclosure is 0.01% or greater and 53% or less. By having the ratio less than the above upper limit value, expansion amount during initial charging of the active material for lithium-ion batteries can be decreased. Further, by having the ratio greater than the above lower limit value, non-expansion region retention rate after 5 cycles of the active material for lithium-ion batteries can be increased. It should be noted that the non-expansion region in the present disclosure means a capacity until the restraining pressure starts to increase significantly during charging.

The ratio may be 0.05% or greater, 0.1% or greater, 0.5% or greater, 1.0% or greater, 1.5% or greater, or 2.0% or greater. In addition, the ratio may be 50% or less, 45% or less, 35% or less, 25% or less, 15% or less, 12% or less, or 10% or less.

The ratio of the amount of type I silicon clathrate relative to the total amount of all components contained in the active material may be 0.01% by mass or greater, 0.05% by mass or greater, 0.1% by mass or greater, 0.5% by mass or greater, 1.0% by mass or greater, 1.5% by mass or greater, or 2.0% by mass or greater, and may be 33% by mass or less, 30% by mass or less, 20% by mass or less, 15% by mass or less, 11% by mass or less, or 10% by mass or less.

The contents of type I silicon clathrate and type II silicon clathrate can be calculated based on peak intensities from X-ray diffraction measurements using CuKα rays. Specifically, using Rietveld analysis, the contents can be calculated using the RIR (Reference Intensity Ratio) method. For the analysis, a PDXL2 from RIGAKU Corporation can be used.

Examples of methods for manufacturing the active material for lithium-ion batteries of the present disclosure include, but are not limited to, a method comprising mixing a silicon source with a sodium source and heating the mixture to obtain a powdery sodium-silicon (NaSi) alloy and then mixing the obtained NaSi alloy with aluminum fluoride and heating the mixture to obtain silicon clathrate.

The sodium source in the step of obtaining the NaSi alloy is exemplified by, but not limited to, sodium hydride.

The heating temperature in the step of obtaining the NaSi alloy may be 200°C to 700°C, 300°C to 600°C, or 400°C to 500°C.

The mass ratio of the NaSi alloy to aluminum fluoride in the step of obtaining silicon clathrate may be 1:0.15 to 1:0.70, 1:0.25 to 1:0.60, or 1:0.35 to 1:0.50.

The heating temperature in the step of obtaining silicon clathrate may be 200°C to 500°C, 250°C to 450°C, or 300°C to 400°C.

By adjusting the heating temperature in the step of obtaining the NaSi alloy, and the mass ratio of the NaSi alloy to aluminum fluoride and the heating temperature in the step of obtaining silicon clathrate, the ratio of type I silicon clathrate to type II silicon clathrate in the resulting active material for lithium-ion batteries can be controlled. The ratio can also be controlled by dissolving and removing one of the type I silicon clathrate and the type II silicon clathrate after the silicon clathrate is generated.

The type I silicon clathrate and/or type II silicon clathrate in the active material for lithium-ion batteries of the present disclosure may be porous silicon clathrate. Expansion due to charging-discharging can be absorbed by the voids in the porous silicon clathrate. Thus, the capacity until restraining pressure during charging starts to increase significantly, i.e., the non-expansion region, can be increased and the expansion can be decreased.

Examples of methods of manufacturing the active material for lithium-ion batteries of the present disclosure when the type I silicon clathrate and/or type II silicon clathrate is porous silicon clathrate include, but are not limited to, a method comprising mixing silicon with metallic lithium to obtain a lithium-silicon (LiSi) alloy, reacting the obtained LiSi alloy with ethanol to obtain porous silicon, and using the obtained porous silicon as a silicon raw material to produce the silicon clathrate as described above.

### <<Lithium-ion battery>>

The lithium-ion battery of the present disclosure may be a liquid-based battery or a solid-state battery. It should be noted that the "solid-state battery" relating to the present disclosure means a battery using at least a solid electrolyte as the electrolyte, and therefore the solid-state battery may use a combination of a solid electrolyte and a liquid electrolyte as the electrolyte. In addition, the solid-state battery of the present disclosure may be an all-solid-state battery, i.e., a battery using only a solid electrolyte as the electrolyte.

The lithium-ion battery of the present disclosure comprises a negative electrode active material layer, and the negative electrode active material layer comprises the active material for lithium-ion batteries of the present disclosure. The lithium-ion battery of the present disclosure may comprise a negative electrode current collector layer, a negative electrode active material layer comprising the active material for lithium-ion batteries of the present disclosure, a solid electrolyte layer, a positive electrode active material layer, and a positive electrode current collector layer in this order.

The lithium-ion battery of the present disclosure can be restrained by restraining members such as endplates from both sides in the laminating direction of the above layers. A restraining method is exemplified by, but not limited to, a method using restraining torque of bolts.

### <Negative electrode current collector layer>

The material used for the negative electrode current collector layer is not particularly limited. Any material that can be used as a negative electrode current collector of a battery can be appropriately adopted. For example, the material may be, but is not limited to, copper, copper alloy, or copper plated or vapor-deposited with nickel, chromium, or carbon.

The shape of the negative electrode current collector layer is not particularly limited, and can include, for example, foil-like, plate-like, or mesh-like. Among these, a foil-like shape is preferable.

### <Negative electrode active material layer>

The negative electrode active material layer of the present disclosure is a layer containing a negative electrode active material and optionally a solid electrolyte, a conductive aid, and a binder.

### (Negative electrode active material)

The negative electrode active material comprises the active material for lithium-ion batteries of the present disclosure.

### (Solid electrolyte)

The material of the solid electrolyte is not particularly limited. Any material that is usable as a solid electrolyte used in lithium-ion batteries can be used. For example, the solid electrolyte may be a sulfide solid electrolyte.

Examples of the sulfide solid electrolyte include, but are not limited to, sulfide amorphous solid electrolytes, sulfide crystalline solid electrolytes, and argyrodite-type solid electrolytes. Specific examples of the sulfide solid electrolyte can include, but are not limited to, Li₂S-P₂S₅-based (such as Li₇P₃S₁₁, Li₃PS₄, and Li₈P₂S₉), Li₂S-SiS₂, LiI-Li₂S-SiS₂, LiI-Li₂S-P₂S₅, LiI-LiBr-Li₂S-P₂S₅, Li₂S-P₂S₅-GeS₂ (such as Li₁₃GeP₃S₁₆ and Li₁₀GeP₂S₁₂), LiI-Li₂S-P₂O₅, LiI-Li₃PO₄-P₂S₅, and Li₇₋ₓPS₆₋ₓClₓ; and combinations thereof.

The sulfide solid electrolyte may be a glass or a crystallized glass (glass ceramic).

When the negative electrode active material layer contains a solid electrolyte, a mass ratio (mass of active material for lithium-ion batteries : mass of solid electrolyte) of the active material for lithium-ion batteries to the solid electrolyte in the negative electrode active material layer is preferably 85:15 to 30:70, and more preferably 80:20 to 40:60.

### (Conductive aid)

The conductive aid is not particularly limited. For example, the conductive aid may be, but is not limited to, VGCF (vapor-grown carbon fiber), acetylene black (AB), ketjen black (KB), carbon nanotube (CNT), or carbon nanofiber (CNF).

### (Binder)

The binder is not particularly limited. For example, the binder may be of, but is not limited to, a material such as polyvinylidene fluoride (PVdF), butadiene rubber (BR), or styrene-butadiene rubber (SBR), or a combination thereof.

The thickness of the negative electrode active material layer may be, for example, 0.1 to 1000 µm.

### <Solid electrolyte layer>

The solid electrolyte layer comprises at least a solid electrolyte. In addition, the solid electrolyte layer may comprise a binder in addition to the solid electrolyte, as needed. The above descriptions relating to the negative electrode active material layer of the present disclosure can be referenced regarding the solid electrolyte and the binder.

The thickness of the solid electrolyte layer, for example, is 0.1 to 300 µm, and preferably 0.1 to 100 µm.

### <Positive electrode active material layer>

The positive electrode active material layer is a layer containing a positive electrode active material and optionally a solid electrolyte, a conductive aid, and a binder.

The material of the positive electrode active material is not particularly limited. For example, the positive electrode active material may be, but is not limited to, lithium cobaltate (LiCoO₂), lithium nickelate (LiNiO₂), lithium manganate (LiMn₂O₄), LiCo_{1/3}Ni_{1/3}Mn_{1/3}O₂, a heteroelement-substituted Li-Mn spinel having a composition represented by Li₁₊ₓMn_{2-x-y}M_{y}O₄ (M is one or more metal elements selected from Al, Mg, Co, Fe, Ni, and Zn), lithium titanate (LiₓTiO_{y}), or lithium metal phosphate (LiMPO₄, where M is one or more metals selected from Fe, Mn, Co, and Ni).

The positive electrode active material can comprise a covering layer. The covering layer is a layer containing a material that has lithium-ion conducting performance, has low reactivity with the positive electrode active material and the solid electrolyte, and can maintain the form of a covering layer that does not flow even when brought into contact with the active material or the solid electrolyte. Specific examples of the material constituting the covering layer can include, but are not limited to, Li₄Ti₅O₁₂ and Li₃PO₄, in addition to LiNbO₃.

Examples of shapes of the positive electrode active material include particulate. The average particle size (D50) of the positive electrode active material is not particularly limited, and for example, is 10 nm or more, and may be 100 nm or more. The average particle size (D50) of the positive electrode active material is, for example, 50 µm or less, and may be 20 µm or less. The average particle size (D50) can be calculated from measurements with, for example, a laser diffraction particle size distribution analyzer or a scanning electron microscope (SEM).

The above descriptions relating to the negative electrode active material layer of the present disclosure can be referenced regarding the solid electrolyte, the conductive aid, and the binder.

When the positive electrode active material layer contains a solid electrolyte, the mass ratio (mass of positive electrode active material : mass of solid electrolyte) of the positive electrode active material to the solid electrolyte in the positive electrode active material layer is preferably 85:15 to 30:70, and more preferably 80:20 to 50:50.

The thickness of the positive electrode active material layer, for example, is 0.1 µm to 1000 µm, preferably 1 µm to 100 µm, and even more preferably 30 µm to 100 µm.

### <Positive electrode current collector layer>

The material used for the positive electrode current collector layer is not particularly limited. Any material that can be used as a positive electrode current collector of a battery can be appropriately adopted. For example, the material may be, but is not limited to, SUS, nickel, chromium, gold, platinum, aluminum, iron, titanium, zinc, or one of these metals plated or vapor-deposited with nickel, chromium, or carbon.

The shape of the positive electrode current collector layer is not particularly limited, and can include, for example, foil-like, plate-like, or mesh-like. Among these, a foil-like shape is preferable.

### EXAMPLES

### <<Synthesis of active material for lithium-ion batteries>>

### <Alloying>

### (Comparative Example 1)

As a silicon (Si) source, Si powder (Japan Pure Chemical Co., Ltd., SIEPB32) was prepared. The Si powder and metallic lithium (Li) were weighed at a molar ratio of Li/Si = 4.0, the weighed Si powder and Li were mixed in a mortar in an argon atmosphere to obtain a lithium-silicon (LiSi) alloy. The obtained LiSi alloy was reacted with ethanol in an argon atmosphere and further treated with hydrogen fluoride (HF) to obtain a powder having primary particles with voids therein, i.e., Si powder having a porous structure.

The Si powder having a porous structure and sodium hydride (NaH) as a sodium (Na) source were used to manufacture a sodium-silicon (NaSi) alloy. It should be noted that the NaH used was preliminarily washed with hexane. The NaH and the Si powder having a porous structure were weighed at a molar ratio of 1.05: 1, and the weighed NaH and Si powder having a porous structure were mixed with a cutter mill. The obtained mixture was heated under the conditions of 400°C and 40 h in an argon atmosphere with a heating furnace to obtain a powdery NaSi alloy.

### <Clathratization>

The obtained NaSi alloy and aluminum fluoride (AlF₃) were weighed at a molar ratio of 1:0.35, and the weighed NaSi alloy and AlF₃ were mixed with a cutter mill to obtain a reaction starting material. The obtained powdery reaction starting material was placed in a reaction vessel made of stainless steel and heated under the conditions of 310°C and 60 h in an argon atmosphere with a heating furnace to allow a reaction to obtain a reaction product comprising silicon clathrate. The obtained reaction product was acid-washed using a mixed solvent of HNO₃ and H₂O mixed at a volume ratio of 10:90 to remove by-products in the reaction product. After washing, the reaction product was filtered, and the filtered solid content was dried at 120°C for 3 h or more to obtain a powdery reaction product. The obtained material was further washed with a 3-wt% HF solution, filtered, and then dried at 120°C for 3 h or more to obtain the active material for lithium-ion batteries of Comparative Example 1. It should be noted that the surfaces of the active material for lithium-ion batteries may comprise a coating containing O element, C element, or N element or impurities such as Fe or Zn.

### (Examples 1 to 3 and Comparative Example 2)

Except that the manufacturing conditions in the step of obtaining the NaSi alloy and the step of obtaining the reaction product comprising silicon clathrate were changed as indicated in Table 1, the active materials for lithium-ion batteries of Examples 1 to 3 and Comparative Example 2 were obtained in the same manner as in Comparative Example 1.

### <<Production of lithium-ion battery>>

Using the active material for lithium-ion batteries of each example, a lithium-ion battery of each example was produced as follows.

### <Formation of negative electrode active material layer>

Butyl butyrate, a 5-wt% butyl butyrate solution of a polyvinylidene fluoride (PVDF)-based binder, vapor-grown carbon fiber (VGCF) as the conductive aid, the synthesized active material for lithium-ion batteries, and a Li₂S-P₂S₅-based glass ceramic as the sulfide solid electrolyte were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 30 min to obtain a negative electrode mixture slurry.

The obtained negative electrode mixture slurry was applied onto a copper (Cu) foil as a negative electrode current collector layer by a blade method using an applicator and dried for 30 min on a hot plate heated to 100°C to form a negative electrode active material layer on the negative electrode current collector layer.

### <Formation of solid electrolyte layer>

Heptane, a 5-wt% heptane solution of a butadiene rubber (BR)-based binder, and a Li₂S-P₂S₅-based glass ceramic as the sulfide solid electrolyte were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 30 min to obtain a solid electrolyte slurry.

The obtained solid electrolyte slurry was applied onto an aluminum (Al) foil as a release sheet by a blade method using an applicator and dried for 30 min on a hot plate heated to 100°C, whereby a solid electrolyte layer was formed. Three solid electrolyte layers were produced.

### <Formation of positive electrode active material layer>

Butyl butyrate, a 5-wt% butyl butyrate solution of a PVDF-based binder, LiNi_{1/3}Co_{1/3}Mn_{1/3}O₂ having an average particle size of 6 µm as the positive electrode active material, a Li₂S-P₂S₅-based glass ceramic as the sulfide solid electrolyte, and VGCF as the conductive aid were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 3 min, further stirring was carried out with the ultrasonic dispersion apparatus for 30 s, and the container was shaken with the shaker for 3 min to obtain a positive electrode mixture slurry.

The obtained positive electrode mixture slurry was applied onto an Al foil as a positive electrode current collector layer by a blade method using an applicator and dried for 30 min on a hot plate heated to 100°C, whereby a positive electrode active material layer was formed on the positive electrode current collector layer.

### <Assembly of battery>

The positive electrode current collector layer, the positive electrode active material layer, and a first solid electrolyte layer were laminated in this order. The laminated product was set in a roll press machine and pressed at a pressing pressure of 100 kN/cm and a pressing temperature of 165°C, whereby a positive electrode laminated body was obtained.

The negative electrode current collector layer, the negative electrode active material layer, and a second solid electrolyte layer were laminated in this order. The laminated product was set in a roll press machine and pressed at a pressing pressure of 60 kN/cm and a pressing temperature of 25°C, whereby a negative electrode laminated body was obtained.

The Al foil as a release sheet was peeled off from the solid electrolyte layer surface of each of the positive electrode laminated body and the negative electrode laminated body. The Al foil as a release sheet was then peeled off from a third solid electrolyte layer.

The positive electrode laminated body and the negative electrode laminated body were set so that the solid electrolyte layer of each thereof faced the third solid electrolyte layer and laminated to each other. The laminated body was set in a flat uniaxial press machine and temporarily pressed at 100 MPa and 25°C for 10 s. The laminated body was finally set in the flat uniaxial press machine and pressed at a pressing pressure of 200 MPa and a pressing temperature of 120°C for 1 min. As a result, an all-solid-state battery was obtained.

### «Evaluation»

### <XRD measurement>

Content ratios of type I silicon clathrate and type II silicon clathrate in the obtained active material for lithium-ion batteries were calculated based on peak intensities by X-ray diffraction measurements. Specifically, using Rietveld analysis, the content ratios were calculated using the RIR (Reference Intensity Ratio) method. Analysis was carried out using a PDXL2 from RIGAKU Corporation in the present Examples. Further, a ratio of the content ratio of type I silicon clathrate relative to the content ratio of type II silicon clathrate was calculated.

### <Measurement of restraining pressure increase amount >

The restraining pressure increase amount of the produced cell when restrained at a predetermined restraining pressure using a restraining jig and charged by constant current-constant voltage to 4.55 V at a 10-h rate (1/10 C) was measured. A large restraining pressure increase amount means that the expansion amount of the active material is large. It should be noted that the restraining pressure increase amount is the difference between the highest value and the lowest value in restraining pressure. The values of the Examples are shown as relative values when the value of Comparative Example 1 was set to 100.

### <Capacity (non-expansion region) retention rate after 5 cycles>

After the measurement of restraining pressure increase amount, the battery was discharged to 3.0 V at a 1-h rate (1 C), charged by constant current-constant voltage to 4.35 V at a 3-h rate (1/3 C), and discharged by constant current-constant voltage to 3.0 V at a 3-h rate (1/3 C). In that case, the capacity until the restraining pressure starts to increase significantly during charging was defined as the initial capacity. The same charging-discharging test was then repeated 5 times, and the capacity until the restraining pressure starts to increase significantly at the fifth charging was defined as the fifth capacity. The fifth capacity was divided by the initial capacity to calculate the capacity (non-expansion region) retention rate after 5 cycles.

### <<Results>>

The content ratios of type I silicon clathrate and type II silicon clathrate in the active material for lithium-ion batteries, the ratios of the content ratio of type I silicon clathrate relative to the content ratio of type II silicon clathrate, the results of XRD measurement, the measurement results of restraining pressure increase amount, and the calculated results of capacity (non-expansion region) retention rate after 5 cycles are shown in Table 1. It should be noted that in Table 1, "type I" means type I silicon clathrate, and "type II" means type II silicon clathrate.

**[Table 1]**

| | Manufacturing conditions | | | Results | | | | |
|---|---|---|---|---|---|---|---|---|
| | Alloying | Clathratization | | Content ratio in active material [% by mass] | | Type I/Type II [%] | Restraining pressure increase amount (relative value) | Capacity (non-expansion region) retention rate after 5 cycles [%] |
| | Heating temperature [°C] | NaSi:AlF₃ | Heating temperature [°C] | Type I | Type II | | | |
| Comparative Example 1 | 400 | 1:0.35 | 310 | 34.80 | 63.68 | 54.6 | 100 | 81.3 |
| Example 1 | 500 | 1:0.5 | 310 | 10.30 | 88.18 | 11.7 | 93 | 72.7 |
| Example 2 | 500 | 1:0.35 | 350 | 2.30 | 96.77 | 2.4 | 89 | 72.0 |
| Example 3 | 500 | 1:0.35 | 330 | 0.10 | 99.10 | 0.1 | 82 | 74.2 |
| Comparative Example 2 | 500 | 1:0.35 | 310 | 0.001 | 99.969 | 0.001 | 81 | 68.8 |

As shown in Table 1, the batteries of Examples 1 to 3, in which the ratio of type I silicon clathrate relative to type II silicon clathrate is within the range of the present disclosure, had smaller restraining pressure increase amount compared to Comparative Example 1, in which the ratio exceeds the range of the present disclosure, and had higher capacity (non-expansion region) retention rates after 5 cycles compared to Comparative Example 2, in which the rate is under the range of the present disclosure.

## Claims

1. An active material for lithium-ion batteries,
comprising silicon clathrate comprising type I silicon clathrate and type II silicon clathrate, wherein
a ratio of a content ratio of the type I silicon clathrate relative to a content ratio of the type II silicon clathrate is 0.01% or greater and 53% or less.

2. The active material for lithium-ion batteries according to claim 1, wherein the ratio is 0.1% or greater and 15% or less.

3. The active material for lithium-ion batteries according to claim 1, wherein a ratio of a mass of the type I silicon clathrate relative to a total mass of all components contained in the active material is 0.01% by mass or greater and 33% by mass or less.

4. The active material for lithium-ion batteries according to claim 1, wherein the type I silicon clathrate and/or type II silicon clathrate is porous silicon clathrate.

5. A lithium-ion battery, comprising a negative electrode active material layer, wherein the negative electrode active material layer comprises the active material for lithium-ion batteries according to any one of claims 1 to 4.
